# FASCICULE DE BREVET EUROPEEN

(11) **EP 4 638 163 B1**
(45) Date de publication et mention de la délivrance du brevet: **26.08.2026**
(21) Numéro de dépôt: 23833361.1
(22) Date de dépôt: 14.12.2023
(51) Int. Cl.: B60K 1/02, F16H 1/22, H02K 1/276

(54) **SYSTÈME DE PROPULSION POUR VÉHICULE ÉLECTRIQUE OU HYBRIDE**
ANTRIEBSSYSTEM FÜR EIN ELEKTRO- ODER HYBRIDFAHRZEUG
DRIVE SYSTEM FOR AN ELECTRIC OR HYBRID VEHICLE

(30) Priorité: 19.12.2022 FR 2213858
(43) Date de publication de la demande: 29.10.2025
(73) Titulaire: VALEO EMBRAYAGES, 80009 Amiens (FR)
(72) Inventeur: LEMAIRE, Thibault, 80009 AMIENS (FR); VASSIEUX, Loic, 80009 AMIENS (FR); LHEUREUX, Dominique, 80009 AMIENS (FR); VERHOOG, Roël, 80009 AMIENS (FR)
(74) Mandataire: Valeo Powertrain Systems
(86) Numéro de dépôt international: PCT/EP2023/085883
(87) Numéro de publication internationale: WO 2024/132859

(56) Documents cités:
- EP-A1- 2 503 683
- WO-A1-2022/145958
- DE-A1- 102011 056 048

## Description

### DOMAINE TECHNIQUE DE L'INVENTION

L'invention se rapporte à un système de propulsion pour véhicule électrique ou hybride. Ce système de propulsion comprend notamment plusieurs machines électriques fournissant un couple moteur et au moins une succession de trains d'engrenage destinés à être raccordé aux roues du véhicule. De manière optionnelle, le système de propulsion peut comprendre un système de couplage sélectif capable de fournir plusieurs rapports de réduction de vitesse et plusieurs modes de fonctionnement distincts à l'utilisateur du véhicule. Lorsque le véhicule comprend également un moteur thermique accouplé aux machines électriques, le véhicule est dit « hybride » du fait que la propulsion du véhicule puisse se faire soit de manière purement électrique, soit de manière purement thermique ou de manière hybride en utilisant les deux types d'énergie simultanément.

Dans le cas d'un véhicule à propulsion purement électrique, c'est à dire dépourvu de moteur thermique, la fourniture d'électricité peut être réalisée à l'aide de batterie ou au moyen d'une pile à combustible utilisant l'hydrogène comme combustible réducteur. Le véhicule électrique peut être un véhicule automobile ou un véhicule industriel, tel qu'un poids lourd, un autobus ou un tracteur.

### ÉTAT DE LA TECHNIQUE ANTÉRIEURE

On connaît par exemple un tel système de propulsion de la demande de brevet DE102011056048 A1. Ce système de propulsion comporte une première machine électrique réversible et une deuxième machine électrique réversible rapportées sur un carter de transmission, une transmission agencée pour transmettre un couple depuis les machines électriques à une paire de roues entraînées d'un véhicule en passant notamment par un arbre d'entrainement commun. La disposition des machines électriques se fait de manière symétrique par rapport à l'arbre d'entrainement commun. Ainsi, chacune des machines électriques comprend un pignon conçu comme une roue droite relié de manière solidaire en rotation à l'arbre de sortie du rotor. Les pignons affectés aux deux arbres de sortie des machines électriques engrènent avec un engrenage droit commun de la transmission, lesdits arbres de sortie de rotor étant parallèles. Le couple moteur pénètre dans l'arbre d'entrainement commun via l'engrenage droit commun et ressort via une roue conique associée à un différentiel. Dans ce système de propulsion, les arbres de sortie de rotor et l'arbre d'entrainement commun sont supportés par le carter de transmission par l'intermédiaire de paliers de guidage.

Il est connu d'autres applications dans lesquelles on retrouve plusieurs machines électriques tournantes engrenant sur une roue d'engrenage commune, par exemple quatre machines électriques réparties angulairement autour d'une roue dentée commune. On additionne les couples moteurs issus des quatre machines électriques, ce qui peut entrainer une addition du même ordre d'excitation des machines électriques sur une même période. Il y a donc un risque d'augmenter significativement l'amplitude des ordres d'excitation, cette dernière étant proportionnelle an nombre de machines électriques en phase. Cela peut entrainer une flexion importante des engrenages en contact dans la liaison cinématique d'engrènement, voir endommager les paliers de guidage qui supportent la roue d'engrenage commune.

Il existe un besoin pour améliorer le confort acoustique des systèmes de propulsion pour véhicule électrique ou hybride comprenant plusieurs machines électriques et une succession de trains d'engrenage rapportés sur un carter de transmission. Il existe également un besoin pour améliorer la fiabilité mécanique de tels systèmes de propulsion.

### EXPOSÉ DE L'INVENTION

L'invention se propose notamment d'améliorer ce système de propulsion connu.

A cet effet, l'invention a pour objet un système de propulsion pour véhicule électrique ou hybride, comprenant dans un repère orthogonal XYZ :
- un ensemble de n machines électriques tournantes, n étant un nombre entier supérieur ou égal à 2, chaque machine électrique comprenant un stator, un rotor équipé de paires de pôles magnétiques et présentant un arbre de sortie mobile en rotation autour d'un axe de machine, les n machines électriques comprenant le même nombre P de paires de pôles magnétiques ;
- un arbre d'entrainement équipé d'au moins un engrenage d'axe de rotation de l'arbre d'entrainement apte à recevoir le couple moteur fourni par les n machines électriques et lié cinématiquement aux n arbres de sortie ;
- un carter de transmission supportant les n machines électriques et au moins en partie l'arbre d'entrainement ;
dans lequel les axes de machine des n machines électriques sont répartis angulairement autour de l'axe de rotation de l'arbre d'entrainement et l'orientation angulaire du stator d'une des machines électriques est décalée selon son propre axe de machine par rapport à l'orientation angulaire du stator d'une autre machine électrique d'une valeur d'angle β telle que : β = 360° / [ P x n ].

Ce système de propulsion présente l'avantage, grâce au décalage angulaire des machines électriques lors de leur assemblage sur le carter de transmission, de décaler les pôles magnétiques. On décale de cette manière la période de chaque machine électrique et on diminue l'amplitude maximale des ordres d'excitation des machines électriques vu par l'arbre d'entrainement. On améliore ainsi le confort acoustique et la fiabilité mécanique du système de propulsion.

Par exemple, le rotor peut comprendre un nombre P de paires de pôles compris entre 2 et 12, par exemple entre 4 et 8. De cette manière, l'amplitude des ordres d'excitation des machines électriques est réduite par rapport à un cas défavorable où l'on cumulerait les amplitudes. On limite ainsi la flexion des engrenages et pignons constituant les différents trains d'engrenage et on évite l'endommagement du palier de guidage qui supporte l'arbre d'entrainement.

Ainsi, l'arbre d'entrainement tourne autour d'un axe de rotation d'arbre d'entrainement et comprend au moins un engrenage apte à recevoir le couple moteur fourni par les n machines électriques et lié cinématiquement aux n arbres de sortie sans générer de bruit de fonctionnement au sein du système de propulsion.

Avantageusement, les axes de rotor des n machines électriques et l'axe de rotation de l'arbre d'entrainement sont parallèles entre eux.

De préférence, l'arbre d'entrainement tournant autour de l'axe de rotation de l'arbre d'entrainement peut engrener directement avec les n arbres de sortie de rotor par l'intermédiaire de l'au moins un engrenage. Par exemple, l'engrènement direct de l'arbre d'entrainement peut se faire par l'intermédiaire d'une roue dentée commune en contact direct avec les n arbres de sortie de rotor ou par l'intermédiaire de plusieurs engrenages distincts en contact direct avec un arbre de sortie de rotor associé.

Selon un mode de réalisation de l'invention, le nombre entier n de machines électriques peut être supérieur à 2 et chaque stator de l'ensemble des machines électriques peut être décalé selon son propre axe de machine par rapport à l'orientation angulaire du stator de la machine électrique adjacente de la valeur d'angle β. De cette manière, on améliore le confort acoustique et la fiabilité mécanique du système de propulsion.

Avantageusement, le carter de transmission et chaque machine électrique peuvent comprendre des moyens de positionnement angulaire permettant de positionner individuellement chaque machine électrique par rapport au carter de transmission.

De préférence, les moyens de positionnement angulaire peuvent être constitués d'un dispositif de positionnement proéminent réparti respectivement soit sur le carter de transmission, soit sur les machines électriques et d'un dispositif de réception en creux associé au dispositif de positionnement proéminent, le dispositif de réception en creux étant réparti respectivement soit sur les machines électriques, soit sur le carter de transmission. De cette manière, on facilite l'assemblage du système de propulsion.

Avantageusement, chaque machine électrique peut comprendre une enveloppe de protection supportant le stator et une embase de fixation adaptée au carter de transmission, ladite embase de fixation comprenant des trous de passage de vis de fixation et en partie les moyens de positionnement angulaire.

De préférence, l'enveloppe de protection de la machine électrique peut comprendre le dispositif de positionnement proéminent, celui-ci étant est issu de matière avec l'embase de fixation ou rapporté sur l'embase de fixation.

Selon une variante de l'invention, le dispositif de positionnement proéminent peut être une excroissance axiale selon un axe parallèle à l'axe de machine et le dispositif de réception en creux peut être un orifice cylindrique ajusté à la forme de l'excroissance, l'excroissance axiale étant par exemple une goupille.

Avantageusement, le dispositif de positionnement proéminent ou le dispositif de réception en creux peut être intégré directement dans le stator de la machine électrique.

Avantageusement, chaque arbre de sortie de rotor peut comprendre un pignon denté, la position angulaire de l'engrènement du pignon denté d'une des machines électriques sur l'au moins un engrenage de l'arbre d'entrainement est décalé angulairement par rapport à la position angulaire de l'engrènement du pignon denté d'au moins une des autres machines électriques sur ce même engrenage ou sur un autre engrenage de l'arbre d'entrainement.

De préférence, le décalage angulaire de l'engrènement des pignons dentés sur l'arbre d'entrainement peut correspondre à 1/n dent du pignon denté. De cette manière, on harmonise la transmission du couple au sein du train d'engrenage.

Chaque machine électrique est par exemple une machine électrique tournante. La machine électrique peut notamment être synchrone ou asynchrone, a aimants permanents ou non, une machine électrique à réluctance variable. Alternativement, les n machines électriques peuvent être de conception différente.

En variante, les n machines électriques peuvent être de préférence une machine à haute tension, alimentée par exemple à une tension nominale comprise entre 300 Volts et 800 Volts. Des tensions d'alimentation plus élevées peuvent être envisagées telle que 1000 volts. En variante, les n machines électriques peuvent être alimentée en 48 volts.

Les n machines électriques peuvent fournir une même puissance nominale mécanique, cette puissance étant par exemple comprise entre 50kW et 300kW. L'emploi de machines électriques identiques peut permettre de réduire les coûts de production du système de propulsion, en réduisant le besoin en développements spécifiques d'une machine à l'autre et en augmentant les volumes.

Chaque machine électrique peut être configurée pour fonctionner de manière réversible, étant alors associée à une électronique tel qu'un onduleur/redresseur lui permettant alternativement : d'être alimentée en énergie électrique pour fournir un couple moteur, et de générer de l'énergie électrique sur la base d'un couple reçu sur son arbre de sortie lorsque le véhicule freine ou qu'il roule sur sa lancée, par exemple.

De préférence, le rotor d'une des machines électriques peut être disposé axialement sur un côté de l'au moins un engrenage de l'arbre d'entrainement et un rotor d'une autre machine électrique peut être disposé de l'autre côté de l'au moins un engrenage.

Avantageusement, le carter de transmission peut comporter une paroi externe, au moins une surface plane d'appui aménagée sur la paroi externe, ladite surface d'appui définissant un plan perpendiculaire à l'axe du palier de guidage pour supporter les n machines électriques, et n ouvertures débouchant dans la ou les surfaces planes d'appui, les n ouvertures étant traversées chacune par un arbre de sortie de rotor de machine électrique.

Selon un mode de mise œuvre de l'invention préféré, l'arbre d'entrainement peut comprendre une roue dentée commune liée cinématiquement avec l'arbre de sortie de chaque rotor, les n machines électriques étant réparties angulairement autour de la roue dentée commune de sorte à former un réducteur de vitesse entre chaque arbre de sortie de rotor et la roue dentée commune.

Selon un autre mode de mise œuvre de l'invention préféré, l'arbre d'entrainement peut comprendre deux engrenages distincts, les arbres de sortie de chaque rotor étant répartis sur les deux engrenages de sorte à former deux réducteurs de vitesse distincts entre chaque arbre de sortie de rotor et l'engrenage associé.

L'invention peut s'appliquer aux moteurs synchrones comportant un rotor à aimants permanents, et de préférence aux moteurs synchro-réluctants à aimants permanents ou aux machines ayant un rotor à concentration de flux.

Avantageusement, le stator de la machine électrique, alimenté par un courant polyphasé, peut avoir un circuit magnétique comprenant des dents formant entre elles des encoches pour recevoir des conducteurs électriques.

De préférence, le stator peut comprendre un bobinage triphasé généralement couplé en étoile, découpé en paire de pôles, ledit bobinage étant inséré dans des encoches formées dans le stator.

Avantageusement, le stator peut comprendre des encoches de mise en place de bobinage associées aux paires de pôles de la machine électrique, les moyens de positionnement angulaire étant indexés angulairement par rapport aux dites encoches.

De préférence, la machine électrique tournante peut comporter un rotor à aimants permanents. Les paires de pôles peuvent comprendre des aimants permanents logés dans des évidements aménagés dans la masse magnétique du rotor et disposés de manière à former une pluralité de pôles nord et de pôles sud alternés. Les paires de pôles peuvent comprendre des pôles dits saillants qui comprennent alors des bobines enroulées autour de bras radiaux du rotor. Dans ce cas, un pôle est formé par une bobine. Le nombre P de paires de pôles aménagés de la sorte dans le rotor peut varier selon les applications de la machine tournante, de même que le nombre d'encoches formées dans le stator au sein desquelles sont disposés les bobinages.

Le rotor peut comporter au moins un aimant par pôle, par exemple un seul aimant par pôle, ou en variante deux aimants, voire plus d'aimants par pôle. Les aimants permanents peuvent être de forme générale rectangulaire.

La masse magnétique du rotor peut être formée d'un empilement de tôles ou d'une ou plusieurs tôle(s) individuelle(s) enroulée(s) sur elle(s)-même(s) autour de l'axe de rotation. Chaque couche de tôle de la masse magnétique du rotor peut être d'un seul tenant.

Selon un autre de ses aspects, l'invention peut comprendre un système de propulsion pour véhicule électrique, comprenant :
- un ensemble de n machines électriques de propulsion, n étant un nombre entier supérieur ou égal à 2, chaque machine électrique comprenant un stator et un rotor présentant un arbre de sortie mobile en rotation autour d'un axe ;
- une roue dentée commune liée cinématiquement aux n arbres de sortie et apte à recevoir le couple moteur fourni par les n machines électriques, les n machines électriques étant réparties angulairement autour de la roue dentée commune de sorte à former un premier réducteur de vitesse,

le système de propulsion comprenant :
   - des roues dentées primaires aptes à être entraînées par la roue dentée commune ;
   - un arbre intermédiaire apte à être entrainé par des roues dentées intermédiaires, chaque roue dentée primaire étant liée cinématiquement à une roue dentée intermédiaire correspondante de sorte à former un couple d'engrenage auquel est associé un deuxième réducteur de vitesse ;
   - un arbre secondaire apte à entraîner un ensemble d'une ou plusieurs roues motrices du véhicule et présentant une roue dentée secondaire liée cinématiquement à l'arbre intermédiaire de sorte à former un troisième réducteur de vitesse ;
dans lequel un premier système de couplage sélectif, disposé entre la roue dentée commune et les roues dentées primaires ou alternativement entre l'arbre intermédiaire et les roues dentées intermédiaire, sélectionne un premier couple d'engrenage ou un deuxième couple d'engrenage depuis une position neutre.

La répartition angulaire des n machines électriques autour de la roue dentée commune permet d'implanter le système de propulsion dans un encombrement plus restreint, axialement parlant.

### BRÈVE DESCRIPTION DES FIGURES

D'autres caractéristiques et avantages de l'invention ressortiront à la lecture de la description qui suit, en référence aux figures annexées.
[Fig. 1] La figure 1 est une vue isométrique d'un système de propulsion pour véhicule électrique ou hybride selon un premier exemple de mise en œuvre de l'invention,
[Fig. 2] La figure 2 est une vue de face du système de propulsion selon le premier exemple de mise en œuvre de l'invention de la figure 1,
[Fig. 3] La figure 3 est une vue de détail de la machine électrique du système de propulsion selon le premier exemple de mise en œuvre de l'invention,
[Fig. 4] La figure 4 est une vue isométrique d'un système de propulsion pour véhicule électrique ou hybride selon un deuxième exemple de mise en œuvre de l'invention,
[Fig. 5a] La figure 5a une vue de détail du système de propulsion selon le deuxième exemple de mise en œuvre de l'invention de la figure 4,
[Fig. 5b] La figure 5b une autre vue de détail d'un système de propulsion selon le deuxième exemple de mise en œuvre de l'invention de la figure 4.
Pour plus de clarté, les éléments identiques ou similaires sont repérés par des signes de référence identiques sur l'ensemble des figures.

### DESCRIPTION DÉTAILLÉE DE MODES DE RÉALISATION

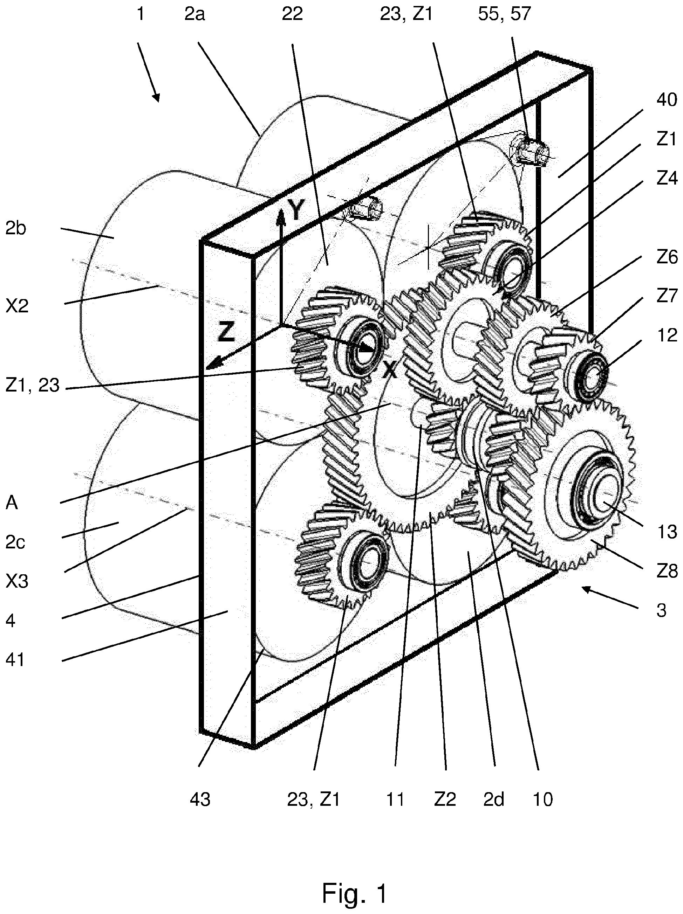

On a représenté sur les figures 1, 2 et 3 un système de propulsion 1 de véhicule électrique selon un premier exemple de mise en œuvre de l'invention comprenant dans un repère orthogonal XYZ, un ensemble de quatre machines électriques 2 tournantes, chaque machine électrique 2a, 2b, 2c et 2d réversibles étant liées cinématiquement à un arbre d'entrainement 11 commun. Ce système de propulsion 1 est ici purement électrique, c'est-à-dire qu'il n'utilise aucun moteur thermique pour entraîner le véhicule qui est ici un véhicule industriel, par exemple un poids lourd.

Dans le repère orthogonal XYZ, les plans XY, YZ et XZ sont perpendiculaires entre eux.

Les machines électriques tournantes 2a, 2b, 2c, 2d sont du même type et sont par exemple des machines synchrones à aimants permanents. Chaque machine électrique fournit une même puissance nominale mécanique, cette puissance étant par exemple de l'ordre 100kW. En variante, il peut s'agir de machines asynchrones, par exemple.

Chaque machine électrique comprend un stator 21, un rotor 22 équipé de paires de pôles magnétiques 25 et présentant un arbre de sortie 23 mobile en rotation autour d'un axe de machine, les quatre machines électriques comprenant le même nombre P de paires de pôles magnétiques. Dans cet exemple, le nombre de paires de pôles est P = 4.

Dans ce système de propulsion 1, chaque machine électrique 2a, 2b, 2c et 2d comprend un stator 21 agencé radialement à l'extérieur du rotor 22 et une enveloppe de protection 24 entourant le stator. Les machines électriques sont rapportées sur un carter de transmission 4 qui comporte une paroi externe 41 et une surface plane d'appui 42 définissant un plan YZ perpendiculaire à l'axe X du repère orthogonal XYZ aménagée sur la paroi externe 41 pour supporter les quatre machines électriques. Le carter de transmission 4 définit un espace interne 40 à l'intérieur duquel est disposé un train d'engrenage 3.

Les enveloppes de protection 24 des machines électriques comprennent une embase de fixation 26 pour la fixation sur la surface plane d'appui 42 du carter de transmission 4. Des ouvertures 43 débouchant dans la surface plane d'appui 42 selon un axe parallèle à l'axe X, permettent le passage des rotors 22 au sein de l'espace interne 40. Les ouvertures 43 sont traversées chacune par l'arbre de sortie 23 des rotors 22 de machine électrique.

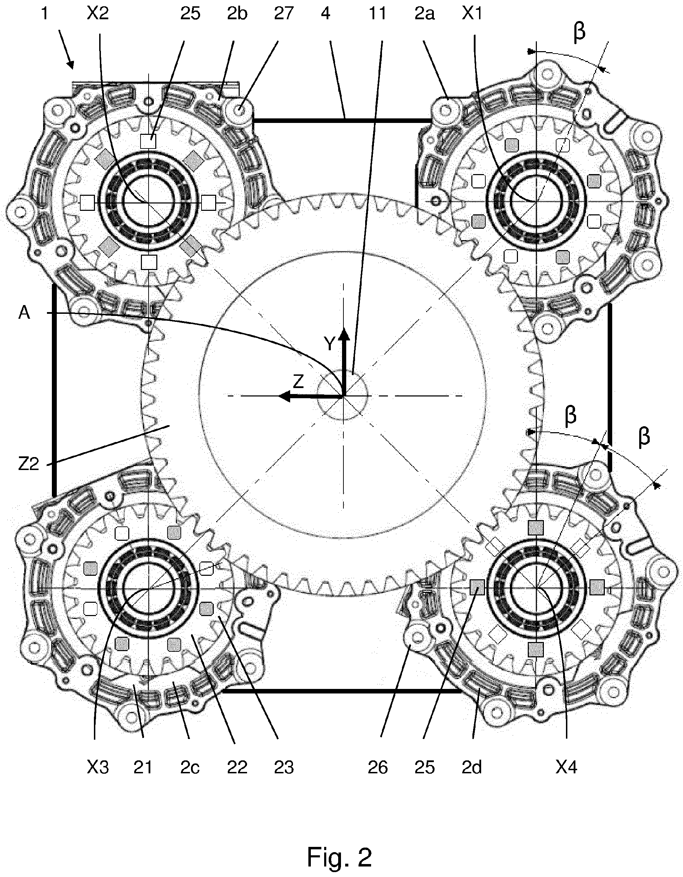

Comme on peut le voir sur la figure 2, la première machine électrique 2a présente dans l'exemple décrit un rotor 22 avec un premier arbre de sortie 23 tournant autour d'un premier axe de rotation X1, la deuxième machine électrique 2b présente un rotor 22 avec un deuxième arbre de sortie 23 tournant autour d'un deuxième axe de rotation X2, la troisième machine électrique 2c présente un rotor avec un troisième arbre de sortie tournant autour d'un troisième axe de rotation X3, et la quatrième machine électrique 2d présente un rotor ayant un quatrième arbre de sortie tournant autour d'un quatrième axe de rotation X4. Dans l'exemple décrit, les axes de rotation des machines électriques tournantes sont parallèles mais non confondus, les quatre machines électriques 2a, 2b, 2c, 2d n'ayant pas leurs axes de rotation alignés. Les quatre machines électriques sont réparties de manière régulière autour de l'axe de rotation A de l'arbre d'entrainement 11 selon un angle égal à 90°.

Chaque arbre de sortie 23 de rotor comprend un pignon denté Z1 accouplé à un engrenage Z2 de l'arbre d'entrainement 11 réalisé sous la forme d'une roue dentée commune Z2 de sorte à former un réducteur de vitesse Z1, Z2 entre chaque arbre de sortie de rotor et la roue dentée commune. Les arbres de sortie 23 des quatre machines électriques engrènent simultanément sur la roue dentée commune Z2 disposée à l'intérieur des axes X1, X2, X3 et X4. La roue dentée commune Z2 reçoit ainsi le couple moteur C0 fourni par les quatre machines électriques,

Le système de propulsion 1 comprend des roues dentées primaires Z3, Z5 aptes à être entraînées par la roue dentée commune Z2 au moyen d'un système de couplage sélectif 10. Le premier système de couplage sélectif 10 disposé entre la roue dentée commune Z2 et les roues dentées primaires Z3, Z5 permet de sélectionner un premier couple d'engrenage Z3, Z4 ou un deuxième couple d'engrenage Z5, Z6 depuis une position neutre de découplage. Ce système de couplage sélectif 10 à trois positions est réalisé sous la forme d'un crabot. En variante, le système de couplage peut comprendre deux sous-ensembles de couplage, le premier étant associé uniquement au premier couple d'engrenage Z3, Z4 et le deuxième étant associé uniquement au deuxième couple d'engrenage Z5, Z6. En variante, le système de couplage peut être réalisé sous la forme d'un synchroniseur.

Le système de propulsion 1 comprend un arbre intermédiaire 12 apte à être entrainé par des roues dentées intermédiaires Z4, Z6 et Z7, chaque roue dentée primaire Z3, Z5 étant liée cinématiquement à une roue dentée intermédiaire Z4, Z6 correspondante de sorte à former un couple d'engrenage auquel est associé un deuxième réducteur de vitesse. L'arbre intermédiaire 12 est supporté en rotation par le carter de transmission 4 à l'aide de paliers de guidage 50'.

Le système de propulsion 1 comprend également un arbre secondaire 13 apte à entraîner un ensemble d'une ou plusieurs roues motrices du véhicule. L'arbre secondaire 13 présente une roue dentée secondaire Z8 liée cinématiquement à l'arbre intermédiaire 12 par l'intermédiaire de la roue intermédiaire Z7, de sorte à former un troisième réducteur de vitesse Z7, Z8.

Dans ce premier exemple de mise en œuvre de l'invention, l'axe de rotation A de la roue dentée commune Z2, l'axe de rotation de l'arbre intermédiaire 12 et l'axe de rotation de l'arbre secondaire 13 sont parallèles.

En fonction de la configuration du premier système de couplage sélectif 10 permettant de sélectionner soit un premier couple d'engrenage Z3, Z4, soit un deuxième couple d'engrenage Z5, Z6, l'arbre secondaire 13 reçoit des valeurs de couple différentes. A partir d'un couple moteur C0 transmis par les quatre machines électriques, reçoit sélectivement : le couple C1 ayant transité par le premier couple d'engrenage, ou le couple C2 ayant transité par le deuxième couple d'engrenage tel que C1 > C2.

Avantageusement, le premier ratio entre le couple moteur C0 et le couple C1 ayant transité par le premier couple d'engrenage Z3, Z4 peut être compris entre 10 et 15, tel que 10 < C0/C1 < 15 et le deuxième ratio entre le couple moteur C0 et le couple C2 ayant transité par le deuxième couple d'engrenage Z5, Z6 peut être compris entre 5 et 10, tel que 5 < C0/C2 < 10.

A titre indicatif, dans le cadre d'un véhicule industriel, le premier ratio peut être égal à 10,5 et le deuxième ratio peut être égal à 6.

Le carter de transmission 4 supporte les quatre machines électriques et la roues dentée commune Z2 à l'aide de paliers de guidage. Le carter de transmission supporte des contraintes mécaniques réparties plus uniformément du fait de la répartition géométrique des machines électriques autour des roues dentées communes. Le carter de transmission est généralement constitué de plusieurs carters assemblés entre eux afin de former un enceinte close protégeant le train d'engrenage 3.

Afin d'améliorer le confort acoustique du système de propulsion, l'invention prévoit de répartir angulairement les axes de machine X1, X2, X3, X4 des quatre machines électriques autour de l'axe de rotation A de l'arbre d'entrainement et l'orientation angulaire du stator d'une des machines électriques est décalée selon son propre axe de machine par rapport à l'orientation angulaire du stator d'une autre machine électrique d'une valeur d'angle β telle que : β = 360° / [ P x n ], P étant le nombre de paires de pôles 25 et n le nombre de machines électriques. Dans cet exemple, on retrouve P= 4 et n= 4 de sorte que l'angle β = 360° / [ 4 x 4 ] = 22,5°.

Plus précisément, chaque stator 21 de l'ensemble des machines électriques est décalé selon son propre axe de machine par rapport à l'orientation angulaire du stator 21 de la machine électrique adjacente de la valeur d'angle β= 22,5°.

Ce système de propulsion présente l'avantage, grâce au décalage angulaire des machines électriques lors de leur assemblage sur le carter de transmission 4, de décaler les pôles magnétiques. On décale de cette manière la période de chaque machine électrique et on diminue l'amplitude maximale des ordres d'excitation des machines électriques. On améliore ainsi le confort acoustique et la fiabilité mécanique du système de propulsion.

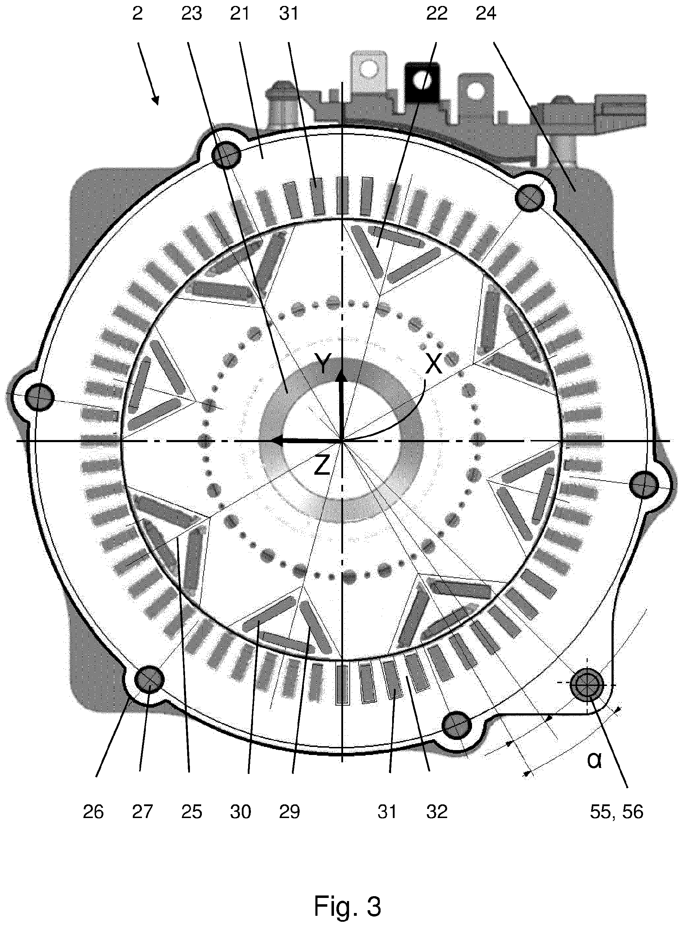

Comme illustré sur les figures 1 et 3, le carter de transmission 4 et chaque machine électrique 2 comprennent des moyens de positionnement angulaire 55 permettant de positionner individuellement chaque machine électrique par rapport au carter de transmission. Les moyens de positionnement angulaire 55 sont constitués d'un dispositif de positionnement proéminent 56 réparti sur les machines électriques et d'un dispositif de réception en creux 57 associé au dispositif de positionnement proéminent 56. Le dispositif de réception en creux 57 constitué d'une série d'orifices est réparti sur le carter de transmission 4. De cette manière, on facilite l'assemblage du système de propulsion.

Chaque machine électrique 2 comprend une enveloppe de protection 24 supportant le stator 21 et une embase de fixation 26 adaptée au carter de transmission 4, ladite embase de fixation 26 comprenant des trous 27 de passage de vis de fixation et en partie les moyens de positionnement angulaire 55.

On a représenté sur la figure 3, une machine électrique 2 de type à aimants permanents qui comprend le stator 21, autrement appelé induit, et un rotor 22 à concentration de flux ayant une masse magnétique rotorique dans laquelle sont ménagés des logements 29 de manière à définir les pôles du rotor, chaque pôle ayant un axe radial Y. Dans cet exemple, le rotor 22 comporte trois logements 29 par pôle, qui sont concentrés autour de chacun des pôles, la concavité des logements étant orientée vers l'entrefer de la machine électrique tournante.

Dans le cas présent, le rotor comporte vingt-quatre aimants 30 permanents. Chaque aimant 30 présente une forme de pavé, de section sensiblement rectangulaire, et chaque aimant est disposé de manière radiale par rapport au centre du rotor de façon à obtenir une structure de rotor de type à concentration de flux. Par ailleurs, les aimants sont arrangés de manière à présenter sur une même face axiale du rotor, une alternance radiale de pôles magnétiques 25 nord et de pôles magnétiques 25 sud, de manière à former quatre paires successives de pôles nord et sud alternés. Tel que cela est visible sur la figure 3, les aimants peuvent avantageusement être segmentés radialement, par exemple en deux, trois ou quatre parties. Le cas illustré sur la figure correspond à une segmentation radiale en trois parties.

Le stator 21 de la machine électrique, alimenté par un courant polyphasé, comprend un circuit magnétique comprenant des dents 32 formant entre elles des encoches 31 disposées radialement pour recevoir des conducteurs électriques. Les conducteurs de l'induit sont placés dans les encoches 31 réparties angulairement autour de la carcasse de la machine et sont groupés en bobine. Les enroulements du stator sont par exemple le siège de courants alternatifs monophasés ou triphasés. Les encoches 31 présentent une profondeur adaptée pour que les bobines qu'elles logent soient intégralement reçues dans le stator et ne gênent pas la rotation du rotor dans le stator. La répartition régulière des encoches 31 forme une pluralité de dents 32 qui s'étendent chacune entre deux encoches voisines.

Dans ce premier exemple de mise en œuvre de l'invention, l'enveloppe de protection 24 de la machine électrique comprend le dispositif de positionnement proéminent 56, celui-ci étant rapporté sur l'embase de fixation 26. Le dispositif de positionnement proéminent 56 est une excroissance axiale selon un axe parallèle à l'axe de machine X, par exemple une goupille. L'axe de la goupille 56 est indexé angulairement par rapport aux encoches 31 selon un angle α. Cet angle α est déterminé en fonction de la position des bobines et par voie de conséquence de la polarité du stator 21. De cette manière, les moyens de positionnement angulaire 55 sont indexés angulairement par rapport aux dites encoches 31.

De manière complémentaire, le dispositif de réception en creux 57 est un orifice cylindrique ajusté au diamètre de la goupille 56. Ainsi, les moyens de positionnement angulaire 55 sont constitués de quatre goupilles 56 réparties sur les machines électriques 2a, 2b, 2c, 2d et de quatre orifices cylindriques 57 usinés dans le carter de transmission 4.

Selon une variante de l'invention, les moyens de positionnement angulaire 55 peuvent être constitués de dents 56 réparties sur les machines électriques 2a, 2b, 2c, 2d et de quatre évidements 57 moulés directement dans le carter de transmission 4. La forme de l'évidement 57 est alors ajustée à la forme de la dent 56.

Selon une autre variante de l'invention, les moyens de positionnement angulaire 55 peuvent être constitués d'un dispositif de positionnement proéminent 56 réparti sur le carter de transmission, par exemple des goupilles insérées dans le carter de transmission, et d'un dispositif de réception en creux 57 associé au dispositif de positionnement proéminent, le dispositif de réception en creux 57 étant réparti sur les machines électriques, par exemple des évidements aménagés directement dans le stator de chaque machine électrique. Le carter de transmission 4 comprend généralement plusieurs carters assemblés entre eux afin de former une enceinte close protégeant le système de propulsion 1.

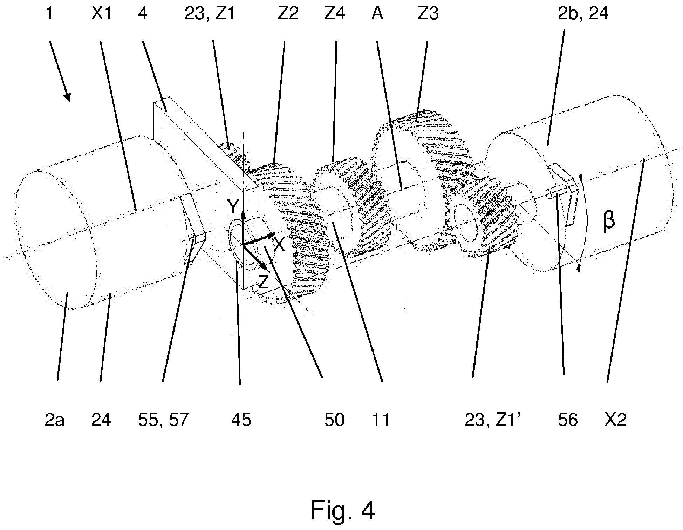

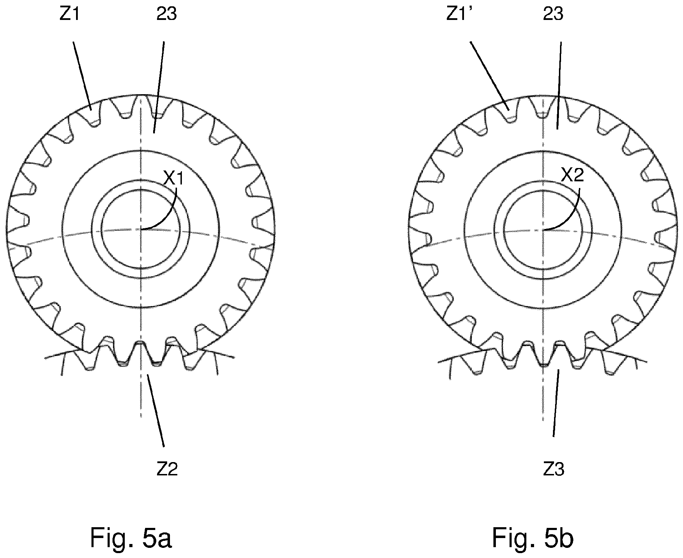

On va maintenant décrire en référence aux figures 4, 5a et 5b, un système de propulsion 1 selon un deuxième mode de mise en œuvre de l'invention comprenant seulement deux machines électriques. Ce deuxième mode de mise en œuvre de l'invention se distingue par le fait que les machines électriques engrènent sur un même arbre d'entrainement par l'intermédiaire de deux engrenages distincts. Les machines électriques tournantes 2a, 2b sont du même type et sont par exemple des machines synchrones.

Dans ce système de propulsion 1, chaque machine électrique 2a, 2b comprend un stator 21 agencé radialement à l'extérieur du rotor 22 et une enveloppe de protection 24 entourant le stator. La première machine électrique 2a présente un premier axe de rotation X1 et la deuxième machine électrique 2b présente un deuxième axe de rotation X2. Les axes de rotation des machines électriques tournantes sont parallèles mais non confondus, les deux machines électriques n'ayant pas leurs axes de rotation alignés.

Comme illustré sur la figure 4, l'enveloppe de protection 24 de la machine électrique 2a est rapportée sur le carter de transmission 4. L'autre enveloppe de protection 24 de la machine électrique 2b est également rapportée sur le carter de transmission 4. Le carter de transmission 4 supporte les machines électriques 2a, 2b et l'arbre d'entrainement 11 à l'aide d'un palier de guidage 50 inséré dans un logement cylindrique 45 aménagé sur une paroi du carter de transmission 4. Le palier de guidage 50 est ici un roulement à billes dont la bague extérieure non tournante est insérée dans le logement cylindrique 45 du carter de transmission.

Dans ce deuxième mode de réalisation, le rotor 22 de la machine électrique 2a présente un arbre de sortie 23 mobile en rotation autour d'un axe de machine X1 lié cinématiquement à l'arbre d'entrainement 11. Le rotor 22 de la machine électrique 2b présente un arbre de sortie 23 mobile en rotation autour d'un axe de machine X2 lié cinématiquement à l'arbre d'entrainement 11. Cet arbre d'entrainement 11 d'axe de rotation A comprend deux engrenages distincts Z2, Z3 d'entrée de couple et un engrenage Z4 de sortie de couple. Les arbres de sortie 23 de chaque rotor sont répartis sur les deux engrenages Z2, Z3 de sorte à former deux réducteurs de vitesse Z1, Z2 et Z1', Z3 distincts entre chaque arbre de sortie de rotor et l'engrenage associé.

Dans ce système de propulsion 1 selon l'invention, les axes X1, X2 des deux machines électriques 2a, 2b sont répartis angulairement autour de l'axe de rotation A de l'arbre d'entrainement 11. Afin d'améliorer le confort acoustique du système de propulsion, l'orientation angulaire du stator de la machine électrique 2a est décalée selon son propre axe de machine par rapport à l'orientation angulaire du stator de l'autre machine électrique 2b d'une valeur d'angle β telle que : β = 360° / [ P x n ], P étant le nombre de paires de pôles 25 et n le nombre de machines électriques. Dans cet exemple, on retrouve P= 4 et n= 2 de sorte que l'angle β = 360° / [ 4 x 2 ] = 45°.

Dans ce deuxième exemple de mise en œuvre de l'invention, l'enveloppe de protection 24 de la machine électrique comprend le dispositif de positionnement proéminent 56. Le dispositif de positionnement proéminent 56 est une excroissance axiale selon un axe parallèle à l'axe de machine X, par exemple une goupille. De manière complémentaire, le dispositif de réception en creux 57 est un orifice cylindrique ajusté au diamètre de la goupille 56 et aménagé sur la carter de transmission 4. Ainsi, les moyens de positionnement angulaire 55 sont constitués de deux goupilles 56 réparties sur les machines électriques 2a, 2b et de deux orifices cylindriques 57 usinés dans le carter de transmission 4.

Ce deuxième mode de mise en œuvre de l'invention se distingue également du premier mode par le fait que le système de propulsion comprend deux machines électriques et que chaque arbre de sortie 23 de rotor comprend un pignon denté Z1, Z1', la position angulaire de l'engrènement du pignon denté Z1 d'une des machines électriques 2a sur un engrenage de l'arbre d'entrainement 11 est décalé angulairement par rapport à la position angulaire de l'engrènement du pignon denté Z1' d'au moins une des autres machines électriques 2b.

Dans le cas où le système de propulsion 1 comprend deux machines électriques identiques comme illustré sur les figures 5a et 5b, le décalage angulaire de l'engrènement des pignons dentés Z1 et Z1' sur l'arbre d'entrainement 11 comprenant une roue dentée commune Z2 correspond à 1/2 dent du pignon denté Z1. Ainsi, l'arbre de sortie 23 du rotor de la machine électrique 2a est engagé sur la roue dentée commune Z2 avec un décalage angulaire d'une demi-dent par rapport à l'arbre de sortie 23 du rotor de la machine électrique 2b. De cette manière, on harmonise la transmission du couple au sein du train d'engrenage.

L'invention n'est pas limitée aux exemples qui viennent d'être décrits. Dans un autre exemple de mise en œuvre de l'invention, le système de propulsion 1 peut être équipé de plusieurs machines électriques réversibles accouplés à une transmission du véhicule hybride qui comprend également un moteur thermique, une boite de vitesses et un mécanisme d'embrayage à friction disposé entre le moteur et la boite de vitesses.

## Revendications

1. Système de propulsion (1) pour véhicule électrique ou hybride, comprenant dans un repère orthogonal (XYZ) :
- un ensemble de n machines électriques (2) tournantes, n étant un nombre entier supérieur ou égal à 2, chaque machine électrique comprenant un stator (21), un rotor (22) équipé de paires de pôles magnétiques (25) et présentant un arbre de sortie (23) mobile en rotation autour d'un axe de machine (Xn), les n machines électriques comprenant le même nombre P de paires de pôles magnétiques (25);
- un arbre d'entrainement (11, 11') équipé d'au moins un engrenage (Z2, Z3) d'axe de rotation (A) de l'arbre d'entrainement apte à recevoir le couple moteur fourni par les n machines électriques (2) et lié cinématiquement aux n arbres de sortie (23) ;
- un carter de transmission (4) supportant les n machines électriques (2) et au moins en partie l'arbre d'entrainement (11, 11') ;
dans lequel les axes de machine (Xn) des n machines électriques (2) sont répartis angulairement autour de l'axe de rotation (A) de l'arbre d'entrainement, **caractérisé en ce que** l'orientation angulaire du stator (21) d'une des machines électriques (2) est décalée selon son propre axe de machine (Xn) par rapport à l'orientation angulaire du stator d'une autre machine électrique d'une valeur d'angle β telle que : β = 360° / [ P x n ].

2. Système de propulsion (1) selon la revendication précédente, dans lequel le nombre entier n de machines électriques est supérieur à 2 et chaque stator (21) de l'ensemble des machines électriques (2) est décalé selon son propre axe de machine (Xn) par rapport à l'orientation angulaire du stator de la machine électrique adjacente de la valeur d'angle β.

3. Système de propulsion (1) selon l'une des revendications précédentes, dans lequel le carter de transmission (4) et chaque machine électrique comprennent des moyens de positionnement angulaire (55) permettant de positionner individuellement chaque machine électrique (2) par rapport au carter de transmission (4).

4. Système de propulsion (1) selon la revendication précédente, dans lequel les moyens de positionnement angulaire (55) sont constitués d'un dispositif de positionnement proéminent (56) réparti respectivement soit sur le carter de transmission, soit sur les machines électriques et d'un dispositif de réception en creux (57) associé au dispositif de positionnement proéminent, le dispositif de réception en creux (57) étant réparti respectivement soit sur les machines électriques, soit sur le carter de transmission.

5. Système de propulsion (1) selon l'une des revendications précédentes, dans lequel chaque machine électrique (2) comprend une enveloppe de protection (24) supportant le stator et une embase de fixation (26) adaptée au carter de transmission, ladite embase de fixation (26) comprenant des trous de passage de vis de fixation et en partie les moyens de positionnement angulaire (55).

6. Système de propulsion (1) selon la revendication précédente, dans lequel l'enveloppe de protection (24) de la machine électrique comprend le dispositif de positionnement proéminent (56), celui-ci étant est issu de matière avec l'embase de fixation (26) ou rapporté sur l'embase de fixation.

7. Système de propulsion (1) selon l'une des revendications 4 à 6, dans lequel le dispositif de positionnement proéminent (56) est une excroissance axiale selon un axe parallèle à l'axe de machine (Xn) et le dispositif de réception en creux (57) est un orifice cylindrique ajusté à la forme de l'excroissance, l'excroissance axiale étant par exemple une goupille.

8. Système de propulsion (1) selon la revendication 4, dans lequel le dispositif de positionnement proéminent (56) ou le dispositif de réception en creux (57) est intégré directement dans le stator (21) de la machine électrique.

9. Système de propulsion (1) selon l'une des revendications précédentes, dans lequel chaque arbre de sortie (23) de rotor comprend un pignon denté (Z1, Z1'), la position angulaire de l'engrènement du pignon denté (Z1, Z1') d'une des machines électriques (2) sur l'au moins un engrenage de l'arbre d'entrainement est décalé angulairement par rapport à la position angulaire de l'engrènement du pignon denté d'au moins une des autres machines électriques sur ce même engrenage ou sur un autre engrenage de l'arbre d'entrainement (11, 11').

10. Système de propulsion (1) selon la revendication précédente, dans lequel le décalage angulaire de l'engrènement des pignons dentés (Z1, Z1') sur l'arbre d'entrainement (11, 11') correspond à 1/n dent du pignon denté.

11. Système de propulsion (1) selon l'une des revendications précédentes, dans lequel le rotor (22) d'une des machines électriques est disposé axialement sur un côté de l'au moins un engrenage (Z2, Z3) de l'arbre d'entrainement et au moins un rotor d'une autre machine électrique est disposé de l'autre côté de l'au moins un engrenage (Z2, Z3).

12. Système de propulsion (1) selon l'une des revendications précédentes, dans lequel les axes de machine (Xn) des n machines électriques (2) et l'axe de rotation (A, A1, A2) de l'arbre d'entrainement sont parallèles entre eux.

13. Système de propulsion (1) selon l'une des revendications précédentes, dans lequel le carter de transmission (4) comporte une paroi externe (41), au moins une surface plane d'appui (42) aménagée sur la paroi externe, ladite surface d'appui (42) définissant un plan (YZ) perpendiculaire à l'axe du palier de guidage (50, 50') pour supporter les n machines électriques, et n ouvertures (43) débouchant dans la ou les surfaces planes d'appui (42), les n ouvertures (43) étant traversées chacune par un arbre de sortie (23) de rotor de machine électrique.

14. Système de propulsion (1) selon l'une des revendications 1 à 13, dans lequel l'arbre d'entrainement comprend une roue dentée commune (11, 11') liée cinématiquement avec l'arbre de sortie (23) de chaque rotor, les n machines électriques (2) étant réparties angulairement autour de la roue dentée commune de sorte à former un réducteur de vitesse (Z1, Z2) entre chaque arbre de sortie de rotor et la roue dentée commune.

15. Système de propulsion (1) selon l'une des revendications 1 à 13, dans lequel l'arbre d'entrainement (11, 11') comprend deux engrenages distincts (Z2, Z3), les arbres de sortie (23) de chaque rotor étant répartis sur les deux engrenages (Z2, Z3) de sorte à former deux réducteurs de vitesse (Z1, Z2 et Z1, Z3) distincts entre chaque arbre de sortie de rotor et l'engrenage associé.

## Patentansprüche

1. Antriebssystem (1) für ein Elektro- oder Hybridfahrzeug, umfassend in einem orthogonalen Koordinatensystem (XYZ):
- eine Gruppe von n rotierenden elektrischen Maschinen (2), wobei n eine ganze Zahl größer oder gleich 2 ist, wobei jede elektrische Maschine einen Stator (21), einen Rotor (22) mit Magnetpolpaaren (25) und eine um eine Maschinenachse (Xn) rotierende Abtriebswelle (23) aufweist, wobei die n elektrischen Maschinen jeweils die gleiche Anzahl P von Magnetpolpaaren (25) besitzen;
- eine Antriebswelle (11, 11') mit mindestens einem Zahnrad (Z2, Z3) mit der Drehachse (A) der Antriebswelle, die das von den n elektrischen Maschinen (2) gelieferte Motordrehmoment aufnehmen kann und kinematisch mit den n Abtriebswellen (23) verbunden ist;
- ein Getriebegehäuse (4), das die n elektrischen Maschinen (2) und zumindest teilweise die Antriebswelle (11, 11') trägt;
Bei diesem Antriebssystem sind die Maschinenachsen (Xn) der n elektrischen Maschinen (2) winklig um die Drehachse (A) der Antriebswelle angeordnet.
**dadurch gekennzeichnet, dass** die Winkelorientierung des Stators (21) einer der elektrischen Maschinen (2) um einen Winkel β um seine eigene Maschinenachse (Xn) gegenüber der Winkelorientierung des Stators einer anderen elektrischen Maschine versetzt ist, wobei gilt: β = 360° / [P x n].

2. Antriebssystem (1) nach dem vorhergehenden Anspruch, wobei die Anzahl n der elektrischen Maschinen größer als 2 ist und jeder Stator (21) der elektrischen Maschinen (2) um den Winkel β um seine eigene Maschinenachse (Xn) gegenüber der Winkelorientierung des Stators der benachbarten elektrischen Maschine versetzt ist.

3. Antriebssystem (1) nach einem der vorhergehenden Ansprüche, wobei das Getriebegehäuse (4) und jede elektrische Maschine eine Winkelpositioniereinrichtung (55) zur individuellen Positionierung jeder elektrischen Maschine (2) relativ zum Getriebegehäuse (4) aufweisen.

4. Antriebssystem (1) nach dem vorhergehenden Anspruch, wobei die Winkelpositioniereinrichtung (55) aus einer hervorstehenden Positioniervorrichtung (56) besteht, die entweder am Getriebegehäuse oder an den elektrischen Maschinen angebracht ist, und einer mit der hervorstehenden Positioniervorrichtung verbundenen vertieften Aufnahmevorrichtung (57), wobei die vertiefte Aufnahmevorrichtung (57) entweder an den elektrischen Maschinen oder am Getriebegehäuse angebracht ist.

5. Antriebssystem (1) nach einem der vorhergehenden Ansprüche, wobei jede elektrische Maschine (2) ein den Stator tragendes Schutzgehäuse (24) und einen am Getriebegehäuse angepassten Befestigungsfläche (26) aufweist, wobei der Befestigungsfläche (26) Bohrungen für Befestigungsschrauben aufweist und die Winkelpositioniereinrichtung (55) teilweise umfasst.

6. Antriebssystem (1) nach dem vorhergehenden Anspruch, wobei das Schutzgehäuse (24) der elektrischen Maschine die vorstehende Positioniervorrichtung (56) aufweist, die aus demselben Material wie die Befestigungsfläche (26) gefertigt oder an dieser befestigt ist.

7. Antriebssystem (1) nach einem der Ansprüche 4 bis 6, wobei die vorstehende Positioniervorrichtung (56) ein axialer Vorsprung um eine zur Maschinenachse (Xn) parallele Achse ist und die vertiefte Aufnahmevorrichtung (57) eine zylindrische Öffnung darstellt, die an die Form des Vorsprungs angepasst ist, wobei der axiale Vorsprung beispielsweise ein Stift ist.

8. Antriebssystem (1) nach Anspruch 4, wobei die vorstehende Positioniervorrichtung (56) oder die vertiefte Aufnahmevorrichtung (57) direkt in den Stator (21) der elektrischen Maschine integriert ist.

9. Antriebssystem (1) nach einem der vorhergehenden Ansprüche, wobei jede Rotorabtriebswelle (23) ein Zahnrad (Z1, Z1') aufweist und die Winkelposition des Eingriffs des Zahnrads (Z1, Z1') einer der Elektromotoren (2) mit mindestens einem Zahnrad der Antriebswelle gegenüber der Winkelposition des Eingriffs des Zahnrads mindestens einer der anderen Elektromotoren mit demselben oder einem anderen Zahnrad der Antriebswelle (11, 11') winkelversetzt ist.

10. Antriebssystem (1) nach dem vorhergehenden Anspruch, bei dem der Winkelversatz des Eingriffs der Zahnräder (Z1, Z1') auf der Antriebswelle (11, 11') 1/n Zähnen des Zahnrads entspricht.

11. Antriebssystem (1) nach einem der vorhergehenden Ansprüche, wobei der Rotor (22) einer der elektrischen Maschinen axial auf einer Seite des mindestens einen Zahnrads (Z2, Z3) der Antriebswelle angeordnet ist und mindestens ein Rotor einer anderen elektrischen Maschine auf der anderen Seite des mindestens einen Zahnrads (Z2, Z3) angeordnet ist.

12. Antriebssystem (1) nach einem der vorhergehenden Ansprüche, wobei die Maschinenachsen (Xn) der n elektrischen Maschinen (2) und die Drehachse (A, A1, A2) der Antriebswelle parallel zueinander verlaufen.

13. Antriebssystem (1) nach einem der vorhergehenden Ansprüche, wobei das Getriebegehäuse (4) eine Außenwand (41) aufweist, auf der sich mindestens eine ebene Lagerfläche (42) befindet, die eine Ebene (YZ) senkrecht zur Achse des Führungslagers (50, 50') definiert, um die n elektrischen Maschinen zu lagern, und n Öffnungen (43) aufweist, die sich in der oder den ebenen Lagerflächen (42) öffnen, wobei durch jede der n Öffnungen (43) eine Abtriebswelle (23) eines Rotors einer elektrischen Maschine verläuft.

14. Antriebssystem (1) nach einem der Ansprüche 1 bis 13, wobei die Antriebswelle ein gemeinsames Zahnrad (11, 11') umfasst, das kinematisch mit der Abtriebswelle (23) jedes Rotors verbunden ist, und die n elektrischen Maschinen (2) winklig um das gemeinsame Zahnrad angeordnet sind, sodass zwischen jeder Rotorabtriebswelle und dem gemeinsamen Zahnrad ein Untersetzungsgetriebe (Z1, Z2) gebildet wird.

15. Antriebssystem (1) nach einem der Ansprüche 1 bis 13, wobei die Antriebswelle (11, 11') zwei separate Zahnräder (Z2, Z3) umfasst, und die Abtriebswellen (23) jedes Rotors auf den beiden Zahnrädern (Z2, Z3) so angeordnet sind, dass zwischen jeder Rotorabtriebswelle und dem zugehörigen Zahnrad zwei separate Untersetzungsgetriebe (Z1, Z2 und Z1, Z3) gebildet werden.

## Claims

1. A propulsion system (1) for an electric or hybrid vehicle, comprising, in an orthogonal reference frame (XYZ):
- a set of n rotary electric machines (2), n being a whole number greater than or equal to 2, each electric machine comprising a stator (21) and a rotor (22) which is equipped with pairs of magnetic poles (25) and has an output shaft (23) that is rotatable about a machine axis (Xn), the n electric machines comprising the same number P of pairs of magnetic poles (25);
- a drive shaft (11, 11') which is equipped with at least one gear (Z2, Z3) of axis of rotation (A) of the drive shaft and is able to receive the drive torque provided by the n electric machines (2) and is kinematically connected to the n output shafts (23);
- a transmission casing (4) supporting the n electric machines (2) and, at least partially, the drive shaft (11, 11');
wherein the machine axes (Xn) of the n electric machines (2) are distributed angularly about the axis of rotation (A) of the drive shaft,
**characterized in that** the angular orientation of the stator (21) of one of the electric machines (2) is offset along its own machine axis (Xn) with respect to the angular orientation of the stator of another electric machine by an angle value β such that: β = 360° / [ P x n ].

2. The propulsion system (1) as claimed in the preceding claim, wherein the whole number n of electric machines is greater than 2 and each stator (21) of the set of electric machines (2) is offset along its own machine axis (Xn) by the angle value β with respect to the angular orientation of the stator of the adjacent electric machine.

3. The propulsion system (1) as claimed in either of the preceding claims, wherein the transmission casing (4) and each electric machine comprise angular positioning means (55) for individually positioning each electric machine (2) with respect to the transmission casing (4).

4. The propulsion system (1) as claimed in the preceding claim, wherein the angular positioning means (55) are made up of a protruding positioning device (56) distributed respectively either on the transmission casing or on the electric machines, and of a recessed receiving device (57) associated with the protruding positioning device, the recessed receiving device (57) being distributed respectively either on the electric machines or on the transmission casing.

5. The propulsion system (1) as claimed in one of the preceding claims, wherein each electric machine (2) comprises a protective cover (24) supporting the stator and a fastening mount (26) appropriate for the transmission casing, said fastening mount (26) comprising through-holes for fastening screws and, partially, the angular positioning means (55).

6. The propulsion system (1) as claimed in the preceding claim, wherein the protective cover (24) of the electric machine comprises the protruding positioning device (56), the latter being formed as an integral part of the fastening mount (26) or attached to the fastening mount.

7. The propulsion system (1) as claimed in one of claims 4 to 6, wherein the protruding positioning device (56) is an axial protuberance along an axis parallel to the machine axis (Xn), and the recessed receiving device (57) is a cylindrical orifice matching the shape of the protuberance, the axial protuberance being, for example, a pin.

8. The propulsion system (1) as claimed in claim 4, wherein the protruding positioning device (56) or the recessed receiving device (57) is incorporated directly into the stator (21) of the electric machine.

9. The propulsion system (1) as claimed in one of the preceding claims, wherein each rotor output shaft (23) comprises a toothed pinion (Z1, Z1'), the angular meshing position of the toothed pinion (Z1, Z1') of one of the electric machines (2) with the at least one gear of the drive shaft being angularly offset with respect to the angular meshing position of the toothed pinion of at least one of the other electric machines with this same gear or with another gear of the drive shaft (11, 11').

10. The propulsion system (1) as claimed in the preceding claim, wherein the angular offset of the meshing of the toothed pinions (Z1, Z1') with the drive shaft (11, 11') corresponds to 1/n tooth of the toothed pinion.

11. The propulsion system (1) as claimed in one of the preceding claims, wherein the rotor (22) of one of the electric machines is disposed axially on one side of the at least one gear (Z2, Z3) of the drive shaft, and at least one rotor of another electric machine is disposed on the other side of the at least one gear (Z2, Z3).

12. The propulsion system (1) as claimed in one of the preceding claims, wherein the machine axes (Xn) of the n electric machines (2) and the axis of rotation (A, A1, A2) of the drive shaft are mutually parallel.

13. The propulsion system (1) as claimed in one of the preceding claims, wherein the transmission casing (4) has an external wall (41), at least one planar bearing surface (42) provided on the external wall, said bearing surface (42) defining a plane (YZ) perpendicular to the axis of the guide bearing (50, 50') in order to support the n electric machines, and n openings (43) that open out on the planar bearing surface or surfaces (42), the n openings (43) each having an output shaft (23) of a rotor of an electric machine passing through them.

14. The propulsion system (1) as claimed in one of claims 1 to 13, wherein the drive shaft comprises a common gearwheel (11, 11') kinematically connected to the output shaft (23) of each rotor, the n electric machines (2) being distributed angularly about the common gearwheel so as to form a reduction gear (Z1, Z2) between each rotor output shaft and the common gearwheel.

15. The propulsion system (1) as claimed in one of claims 1 to 13, wherein the drive shaft (11, 11') comprises two separate gears (Z2, Z3), the output shafts (23) of each rotor being distributed on the two gears (Z2, Z3) so as to form two separate reduction gears (Z1, Z2 and Z1, Z3) between each rotor output shaft and the associated gear.
